# EUROPÄISCHE PATENTSCHRIFT

(11) **EP 3 027 807 B1**
(45) Veröffentlichungstag und Bekanntmachung des Hinweises auf die Patenterteilung: **12.04.2017**
(21) Anmeldenummer: 14739353.2
(22) Anmeldetag: 07.07.2014
(51) Int. Cl.: E01B 31/12, B23K 11/04, B23D 79/02

(54) **VORRICHTUNG ZUM ENTGRATEN STUMPFGESCHWEISSTER SCHIENENSTÖSSE**
DEVICE FOR DEBURRING JOINTS OF BUTT-WELDED RAILWAY PROFILES
DISPOSITIF D'ÉBAVURAGE POUR UN JOINT DE RAILS SOUDÉS BOUT À BOUT

(30) Priorität: 02.08.2013 AT 2532013 U
(43) Veröffentlichungstag der Anmeldung: 08.06.2016
(73) Patentinhaber: Plasser & Theurer Export von Bahnbaumaschinen Gesellschaft m.b.H., 1010 Wien (AT)
(72) Erfinder: FLETZER, Robert, A-2331 Vösendorf (AT)
(86) Internationale Anmeldenummer: PCT/EP2014/001854
(87) Internationale Veröffentlichungsnummer: WO 2015/014433

(56) Entgegenhaltungen:
- EP-A1- 0 038 242
- AT-B- 352 503

## Beschreibung

Die Erfindung betrifft ein Schweißaggregat zum Verschweißen von Schienen eines Gleises, mit einer zur Entfernung eines Schweißwulstes vorgesehenen Abschervorrichtung, die aus einem eine Abscherkante aufweisenden Kopfteil und zwei jeweils eine Abscherkante aufweisenden, zueinander verschwenkbaren Seitenteilen zusammengesetzt ist, wobei jedem Seitenteil ein zur Anlage an einen Schienenfuß vorgesehener Schienenfußabschnitt zugeordnet ist.

Derartige Schweißaggregate zum sogenannten mobilen Abbrennstumpfschweißen sind bereits aus einer Vielzahl von Veröffentlichungen in verschiedenen Ausführungen bekannt geworden, wie beispielsweise durch EP 2 315 877 oder GB 2 185 703 A.

Ein weiteres Schweißaggregat ist durch EP 0 132 227 B1 bekannt, bei dem die beiden Aggregatkörper durch einen Kniehebel miteinander verbunden sind. Die Verschiebezylinder sind an einem Querträger befestigt, an dem Klemmantriebe zum Erfassen der Schiene vorgesehen sind.

Durch US 3 978 746 ist eine Abschervorrichtung zum Entfernen eines Schweißwulstes näher beschrieben.

Eine weitere Vorrichtung kann aus EP0038242A1 entnommen werden, darüber hinaus beschreibt AT352503B eine Vorrichtung gemäß dem Oberbegriff des Anspruchs 1.

Die Aufgabe der vorliegenden Erfindung liegt nun in der Schaffung eines Schweißaggregates der eingangs genannten Art, mit dem ein verbesserter Einsatz möglich ist.

Diese Aufgabe wird erfindungsgemäß mit einem Schweißaggregat der gattungsgemäßen Art dadurch gelöst, dass die beiden Schienenfußabschnitte in einem einander zugewandten Endbereich eine Verzahnung für eine - nach Anlage der beiden Seitenteile an die Schiene in einer Schienenlängsrichtung wirksame - Formschlußverbindung aufweisen.

Durch diese spezielle Ausbildung der Schienenfußabschnitte ist es nunmehr in vorteilhafter Weise möglich, die Verschweißung zweier Schienen auch oberhalb einer Schwelle durchzuführen.

Weitere Vorteile der Erfindung ergeben sich aus der Zeichnungsbeschreibung.

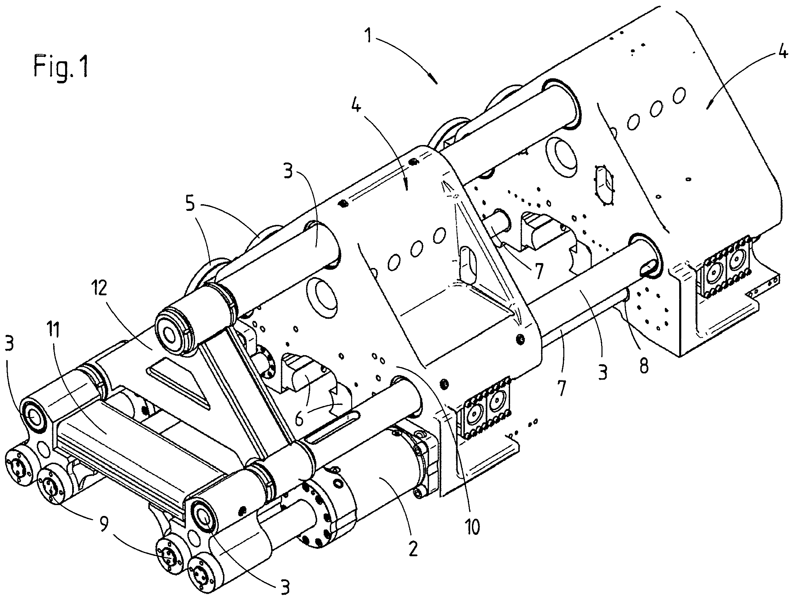

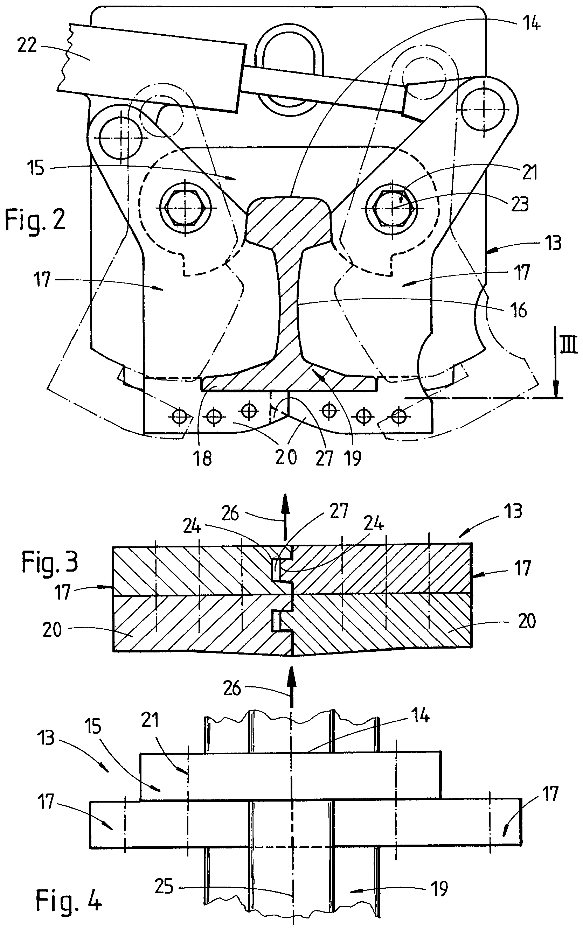

Im Folgenden wird die Erfindung anhand eines in der Zeichnung dargestellten Ausführungsbeispieles näher beschrieben. Es zeigen: Fig. 1 eine Perspektivansicht eines Schweißaggregates, Fig. 2 eine Ansicht einer Abschervorrichtung in Schienenlängsrichtung, Fig. 3 einen vergrößerten Schnitt durch die Abschervorrichtung gemäß der Schnittlinie III in Fig. 2, und Fig. 4 eine Draufsicht auf die Abschervorrichtung.

Ein in Fig. 1 dargestelltes Schweißaggregat 1 setzt sich aus zwei mit Hilfe von Verschiebezylindern 2 entlang von Aggregatführungen 3 zueinander verschiebbaren Aggregatkörpern 4 zusammen. Diese sind jeweils mit zwei Klemmantrieben 5 verbunden, mit denen Klemmbacken 6 an miteinander zu verschweißende, hier nicht näher dargestellte Schienen angepresst werden. Die insgesamt drei Aggregatführungen 3 sind durch eine Brücke 12 miteinander verbunden.

Parallel zu den Aggregatführungen 3 verlaufende Zugstangen 7 sind mit einem ersten Ende 8 am ersten Aggregatkörper 4 befestigt und durch den zweiten Aggregatkörper 4 hindurchgeführt, wobei jeweils ein zweites Ende 9 - bezüglich einer normal zu den Aggregatführungen 3 verlaufenden Außenfläche 10 des zweiten Aggregatkörpers 4 - vorragend positioniert ist.

Die zweiten Enden 9 der beiden Zugstangen 7 sind mit einem Querträger 11 verbunden. Jeder Verschiebezylinder 2 ist einerseits an der genannten Außenfläche 10 des zweiten Aggregatkörpers 4 und andererseits am Querträger 11 befestigt. Dieser ist entlang der beiden unteren Aggregatführungen 3 verschiebbar gelagert, die zu diesem Zweck gegenüber der oberen Aggregatführung 3 verlängert ausgebildet sind.

Eine in Fig. 1 der besseren Übersicht wegen nicht dargestellte, zwischen den beiden Aggregatkörpern 4 positionierte Abschervorrichtung 13 zum Abscheren eines Schweißwulstes ist in Fig. 2 ersichtlich.

Die Abschervorrichtung 13 ist aus einem eine Abscherkante 14 aufweisenden Kopfteil 15 und zwei jeweils eine Abscherkante 16 aufweisenden, zueinander verschwenkbaren Seitenteilen 17 zusammen gesetzt. Jedem Seitenteil 17 ist ein zur Anlage an einen Schienenfuß 18 einer Schiene 19 vorgesehener Schienenfußabschnitt 20 zugeordnet. Die beiden Seitenteile 17 sind jeweils durch eine rasch lösbare Steckverbindung 21 am Kopfteil 15 befestigt. Außerdem ist jeder Seitenteil 17 zum Verschenken um eine parallel zur Schiene 19 verlaufende Achse 23 mit einem Schwenkantrieb 22 verbunden.

Die beiden Schienenfußabschnitte 20 weisen in einem einander zugewandten Endbereich 24 eine Verzahnung 27 für eine - nach Anlage der beiden Seitenteile 17 an die Schiene 19 in einer Schienenlängsrichtung 25 bzw. einer Abscherrichtung 26 wirksame - Formschlußverbindung auf (s. insbesondere Fig. 3). Damit ist es möglich, die beiden Schienenfußabschnitte 20 mit einer geringeren Höhe auszubilden, so dass eine Schweißung auch direkt oberhalb einer Schwelle durchführbar ist.

Wie in Fig. 4 ersichtlich, ist der Kopfteil 15 bezüglich der Abscherrichtung 26 vor den beiden Seitenteilen 17 positioniert. Damit wird der Schweißwulst bei der Abscherung von der Schiene 19 automatisch aufgebrochen und ist somit einfacher zu entfernen.

## Patentansprüche

1. Schweißaggregat zum Verschweißen von Schienen (19) eines Gleises, mit einer zur Entfernung eines Schweißwulstes vorgesehenen Abschervorrichtung (13), die aus einem eine Abscherkante (14) aufweisenden Kopfteil (15) und zwei jeweils eine Abscherkante (16) aufweisenden, zueinander verschwenkbaren Seitenteilen (17) zusammengesetzt ist, wobei jedem Seitenteil (17) ein zur Anlage an einen Schienenfuß (18) vorgesehener Schienenfußabschnitt (20) zugeordnet ist, **dadurch gekennzeichnet, dass** die beiden Schienenfußabschnitte (20) in einem einander zugewandten Endbereich (24) eine Verzahnung (27) für eine - nach Anlage der beiden Seitenteile (17) an die Schiene (19) in einer Schienenlängsrichtung (25) wirksame - Formschlußverbindung aufweisen.

## Claims

1. A welding unit for welding rails (19) of a track, including a shearing device (13) provided for removing a weld bead, the shearing device being composed of a head part (15) having a shearing edge (14) and two side parts (17) which are pivotable towards one another and each have a shearing edge (16), wherein a rail base section (20) provided for being applied to a rail base (18) is associated with each side part (17), **characterized in that**, in an end region (24) facing towards each another, the two rail base sections (20) have a tooth system (27) for a form-locking connection which is effective in a longitudinal direction (25) of the rail after the two side parts (17) have been applied to the rail (19).

## Revendications

1. Module de soudure pour la soudure de rails (19) d'une voie ferrée, avec un dispositif de cisaillement (13) prévu pour le retrait d'un cordon de soudure qui est composé d'une partie de tête (15) présentant une arête de cisaillement (14) et de deux parties latérales (17) présentant chacune une arête de cisaillement (16), pouvant pivoter l'une par rapport à l'autre, dans lequel une section de patin de rail (20) prévue pour l'appui sur un patin de rail (18) est associée à chaque partie latérale (17), **caractérisé en ce que** les deux sections de patin de rail (20) présentent dans une région d'extrémité (24) tournée l'une vers l'autre un engrènement (27) pour une connexion par fermeture géométrique efficace dans une direction longitudinale de rail (25) après appui des deux parties latérales (17) sur le rail (19).
